# EUROPÄISCHE PATENTSCHRIFT

(11) **EP 4 000 371 B1**
(45) Veröffentlichungstag und Bekanntmachung des Hinweises auf die Patenterteilung: **18.09.2024**
(21) Anmeldenummer: 20207408.4
(22) Anmeldetag: 13.11.2020
(51) Int. Cl.: A01D 34/73

(54) **KLINGE FÜR EIN MÄHWERK, FÜR EINEN RASENMÄHER UND/ODER EINE MOTORSENSE, MÄHWERK FÜR EINEN RASENMÄHER UND/ODER EINE MOTORSENSE UND RASENMÄHER UND/ODER MOTORSENSE**
BLADE FOR A MOWER UNIT, FOR A LAWNMOWER AND/OR A STRIMMER, MOWER UNIT FOR A LAWNMOWER AND/OR A STRIMMER AND LAWNMOWER AND/OR STRIMMER
LAME POUR UNE UNITÉ DE COUPE, POUR UNE TONDEUSE À GAZON ET/OU UNE DÉBROUSSAILLEUSE, UNITÉ DE COUPE POUR UNE TONDEUSE À GAZON ET/OU UNE DÉBROUSSAILLEUSE, ET TONDEUSE À GAZON ET/OU DÉBROUSSAILLEUSE

(43) Veröffentlichungstag der Anmeldung: 25.05.2022
(73) Patentinhaber: Andreas Stihl AG & Co. KG, 71336 Waiblingen (DE)
(72) Erfinder: ELFNER, Jörg, 72119 Ammerbuch (DE); SCHULTE STROTMES, Simon, 71332 Waiblingen (DE); GASSNER, Markus, 6345 Kössen (AT); FIEBIG, Marko, 6336 Langkampfen (AT); WOLF, Philip, 6341 Ebbs (AT)
(74) Vertreter: Patentanwälte Ruff, Wilhelm, Beier, Dauster & Partner mbB

(56) Entgegenhaltungen:
- EP-A1- 0 603 086
- EP-B1- 0 603 086
- WO-A1-2016/150503
- DE-U1- 202015 009 764
- JP-U- S57 173 525
- US-A- 3 604 189

## Beschreibung

### ANWENDUNGSGEBIET UND STAND DER TECHNIK

Die Erfindung bezieht sich auf eine Klinge für ein Mähwerk für einen Rasenmäher und/oder eine Motorsense, ein Mähwerk für einen Rasenmäher und/oder eine Motorsense aufweisend mindestens eine solche Klinge und einen Rasenmäher und/oder eine Motorsense aufweisend ein solches Mähwerk.

Die EP 0 603 086 A1 offenbart eine Klinge, wobei diese Klinge bemerkenswert ist, indem sie einen kreisförmigen Körper umfasst, der in der Lage ist, mindestens eine Schneidvorrichtung aufzunehmen, die sich radial über dem Körper befindet, wobei die Schneidvorrichtung oder die Schneidvorrichtungen in Kombination mit Anordnungen des Körpers montiert sind, um zum einen automatisch beim Auftreffen auf einen harten, nicht schneidbaren Gegenstand zurückgezogen zu werden und zum anderen unter der Wirkung der Zentrifugalkraft in die Arbeitsposition zurückgeführt zu werden.

### AUFGABE UND LÖSUNG

Der Erfindung liegt als Aufgabe die Bereitstellung einer Klinge für ein Mähwerk für einen Rasenmäher und/oder eine Motorsense, eines Mähwerks für einen Rasenmäher und/oder eine Motorsense aufweisend mindestens eine solche Klinge und eines Rasenmähers und/oder einer Motorsense aufweisend ein solches Mähwerk, zugrunde, die und/oder das und/oder der und/oder die jeweils verbesserte Eigenschaften aufweisen/aufweist.

Die Erfindung löst diese Aufgabe durch die Bereitstellung eine Klinge mit den Merkmalen des Anspruchs 1. Des Weiteren wird die der Erfindung zugrundeliegende Aufgabe durch die Bereitstellung eines Mähwerks mit den Merkmalen des Anspruchs 10 gelöst. Außerdem wird die der Erfindung zugrundeliegende Aufgabe durch die Bereitstellung eines Rasenmähers und/oder einer Motorsense mit den Merkmalen des Anspruchs 14 gelöst. Vorteilhafte Weiterbildungen der Erfindung sind in den abhängigen Ansprüchen beschrieben.

Die erfindungsgemäße Klinge ist für ein, insbesondere sich drehendes, Mähwerk für einen Rasenmäher, insbesondere einen Roboterrasenmäher, und/oder eine Motorsense ausgebildet bzw. konfiguriert. Die Klinge, insbesondere ein Blatt und/oder eine Außenform der Klinge, ist im Wesentlichen bzw. etwa, insbesondere genau, Parallelogramm-förmig. Die Klinge, insbesondere das Paralellogramm, umfasst bzw. weist einen Schlitz auf. Der Schlitz ist zur Aufnahme eines Klingenhalteelements, insbesondere eines Klingenhaltestifts- bzw. bolzens bzw. -pins, des Mähwerks derart ausgebildet bzw. konfiguriert, dass die Klinge sich um das Klingenhalteelement herum drehen bzw. rotatorisch bewegen und gegenüber dem Klingenhalteelement verschieben bzw. translatorisch bewegen kann für eine, insbesondere erste, Schneidposition der Klinge definiert durch ein, insbesondere erstes, Ende des Schlitzes mit einer, insbesondere ersten, Schneidausrichtung der Klinge und eine andere, insbesondere zweite, Schneidposition der Klinge definiert durch ein anderes, insbesondere zweites, Ende des Schlitzes mit einer anderen, insbesondere zweiten, Schneidausrichtung der Klinge. Eine durch die Enden des Schlitzes begrenzte bzw. definierte Strecke verläuft nicht-parallel zu Seiten des Parallelogramms. Das Parallelogramm hat bzw. weist einen stumpfen Innenwinkel auf. Der stumpfe Innenwinkel, insbesondere ein Wert des Innenwinkels, ist minimal 95 °, und insbesondere maximal 120 °, insbesondere 100 °.

Dies, insbesondere das Drehen und das Verschieben, ermöglicht ein Wegbewegen bzw. ein Ausweichen der Klinge bei einem Auftreffen auf ein Hindernis bzw. einer Kollision mit bzw. einem Stoß an dem Hindernis. Somit ermöglicht dies ein Risiko einer Beschädigung, insbesondere eines Bruchs und/oder einer Zerstörung, der Klinge zu reduzieren oder sogar ganz zu vermeiden. Somit ermöglicht dies eine lange Lebensdauer der Klinge und/oder eine hohe Sicherheit. Zusätzlich oder alternativ ermöglicht dies, insbesondere das Drehen und das Verschieben, ein Wechseln der Schneidpositionen mit den Schneidausrichtungen, insbesondere ohne die Klinge von dem Mähwerk, insbesondere die Halterung der Klinge, lösen zu brauchen.

Zusätzlich oder alternativ ermöglicht dies, insbesondere ermöglichen die Schneidpositionen und die Schneidausrichtungen, einen Verschleiß der Klinge an, insbesondere den, verschiedenen Seiten des Parallelogramms. Somit ermöglicht dies eine lange Einsatzdauer der Klinge.

Zusätzlich oder alternativ ermöglicht dies, insbesondere das Parallelogramm, eine Symmetrie, insbesondere eine Punktsymmetrie und/oder eine zweizählige Drehsymmetrie, der Klinge. Somit ermöglicht dies eine Unwucht der Klinge, insbesondere des Mähwerks, gering zu halten oder sogar ganz zu vermeiden. Zusätzlich oder alternativ ermöglicht dies, insbesondere unabhängig davon, ob die Klinge in der einen Schneidposition mit der einen Schneidausrichtung, insbesondere verschoben und gedreht, ist oder in der anderen Schneidposition mit der anderen Schneidausrichtung, insbesondere verschoben und gedreht, ist, ein gleiches Schnitt- bzw. Mähergebnis. Zusätzlich oder alternativ ermöglicht dies, insbesondere das Parallelogramm, insbesondere unabhängig von einer Drehrichtung der Klinge, einen gleichen Schnitt- bzw. Mähkreis, insbesondere einen gleichen Durchmesser des Schnittkreises.

Zusätzlich oder alternativ ermöglicht dies, insbesondere ermöglichen der Verlauf der Strecke nicht parallel zu den Seiten des Parallelogramms und der stumpfe Innenwinkel des Parallelogramms, eine Neigung bzw. eine Pfeilung einer, insbesondere schneidenden bzw. mähenden, Seite des Parallelogramms in einer Drehrichtung des Mähwerks nach vorne bzw. vorwärts, insbesondere unter einer Prozesskraft, insbesondere einem Luft- und/oder Schneid- bzw. Mähwiderstand. Somit ermöglicht dies einen guten Schnittwinkel und somit ein gutes Schnitt- bzw. Mähbild bzw. ein gutes Schnitt- bzw. Mähergebnis.

Insbesondere kann die Klinge zum Schneiden bzw. Mähen von Gras ausgebildet sein. Insbesondere kann die Klinge dazu ausgebildet sein, Gras im sogenannten Freischnittverfahren ohne Gegenklinge zu schneiden. Zusätzlich oder alternativ kann die Klinge eine Schneid- bzw. Mähklinge und/oder Messerklinge sein. Zusätzlich oder alternativ kann die Klinge einstückig sein. Zusätzlich oder alternativ kann die Klinge flach bzw. eben sein. Zusätzlich oder alternativ kann die Klinge sich, insbesondere hauptsächlich, in zwei Dimensionen bzw. Richtungen, insbesondere einer Radialrichtung und einer Drehrichtung, erstrecken bzw. ausdehnen und in diesen zwei Dimensionen im Wesentlichen Parallelogramm-förmig sein.

Im Wesentlichen Parallelogramm-förmig kann Nachhergehendes bzw. Folgendes bedeuten: Die Parallelogramm-förmige Grundform der Klinge kann erkennbar sein. Zusätzlich oder alternativ kann die Klinge mindestens eine abgerundete Ecke aufweisen. Insbesondere kann ein Ecken-Radius, insbesondere ein Wert des Ecken-Radius, einer, insbesondere jeweiligen, abgerundeten Ecke maximal 10 % (Prozent), insbesondere maximal 5 %, einer Länge, insbesondere eines Werts der Länge, einer, insbesondere kurzen, Seite des Parallelogramms sein. Zusätzlich oder alternativ können gegenüberliegende Seiten des Parallelogramms im Wesentlichen bzw. etwa, insbesondere genau, gleich lang sein. Insbesondere kann im Wesentlichen gleich lang bedeuten, dass die gegenüberliegenden Seiten des Parallelogramms eine Längenabweichung von maximal 2,5 %, insbesondere maximal 1 %, aufweisen können. Zusätzlich oder alternativ können gegenüberliegende Seiten des Parallelogramms im Wesentlichen bzw. etwa, insbesondere genau, parallel sein. Insbesondere kann im Wesentlichen parallel bedeuten, dass die gegenüberliegenden Seiten des Parallelogramms eine Winkelabweichung von maximal 2,5 ° (Grad), insbesondere maximal 1 °, aufweisen können. Zusätzlich oder alternativ können gegenüberliegende Innenwinkel, insbesondere Werte der Innenwinkel, des Parallelogramms im Wesentlichen bzw. etwa, insbesondere genau, gleich sein. Insbesondere kann im Wesentlichen gleich bedeuten, dass die gegenüberliegenden Innenwinkel des Parallelogramms eine Winkelabweichung von maximal 2,5 °, insbesondere maximal 1 °, aufweisen können.

Der Schlitz kann ein Führungsschlitz und/oder ein Längsschlitz und/oder ein Langloch sein. Zusätzlich oder alternativ kann der Schlitz eine Länge von minimal 25 % und/oder maximal 75 %, insbesondere 50 %, einer Länge einer, insbesondere langen, Seite des Parallelogramms aufweisen. Zusätzlich oder alternativ kann der Schlitz zur Aufnahme des Klingenhalteelements zur, insbesondere beweglich gelagerten, Halterung der Klinge durch das Klingenhalteelement ausgebildet sein. Zusätzlich oder alternativ kann der Schlitz genau, insbesondere die, zwei Enden aufweisen bzw. haben. Zusätzlich oder alternativ können die Enden, insbesondere jeweils, abgerundet bzw. rund sein. Weiter zusätzlich oder alternativ kann der Schlitz in einer durch das Parallelogramm definierten Ebene verlaufen.

Zu einem Zeitpunkt kann die Klinge, insbesondere entweder, in der einen Schneidposition, insbesondere mit der einen Schneidausrichtung, oder in der anderen Schneidposition, insbesondere mit der anderen Schneidausrichtung, verschoben, insbesondere und gedreht, sein. Zusätzlich oder alternativ können die Schneidposition und die Schneidausrichtungen, insbesondere jeweils, stabil und/oder durch eine Zentrifugalkraft erzeugt bzw. verursacht durch eine Drehung des Mähwerks, insbesondere um eine Mähwerk-Drehachse herum, definiert sein. Insbesondere kann die Mähwerk-Drehachse als Mähwerk-Gesamtdrehachse bezeichnet werden.

Die Strecke kann eine Mittelstrecke sein.

Nicht-parallel kann eine Winkelabweichung von minimal 5 °, insbesondere minimal 10 °, bedeuten.

Die Klinge, insbesondere das Parallelogramm, braucht nicht Reckteck-förmig sein.

In einer Weiterbildung der Erfindung umfasst bzw. weist die Klinge an mindestens, insbesondere genau, zwei gegenüberliegenden, insbesondere langen, Seiten des Parallelogramms Schneidkanten auf. Insbesondere ist der Schlitz, insbesondere zur Aufnahme des Klingenhalteelements des Mähwerks, derart ausgebildet, dass die Klinge mit der einen Schneidausrichtung mit einer, insbesondere ersten, der Schneidkanten und mit der anderen Schneidausrichtung mit einer anderen, insbesondere zweiten, der Schneidkanten schneiden bzw. mähen kann. In anderen Worten: Die Enden in der Klinge sind für ein Schneiden bzw. ein Mähen der Klinge mit der einen Schneidausrichtung mit einer, insbesondere ersten, der Schneidkanten und mit der anderen Schneidausrichtung mit einer anderen, insbesondere zweiten, der Schneidkanten angeordnet. Insbesondere kann die Klinge an zwei kurzen Seiten des Parallelogramms Schneidkanten aufweisen. Zusätzlich oder alternativ können sich die Schneidkanten über die, insbesondere jeweiligen, Seiten im Wesentlichen bzw. etwa, insbesondere genau, vollständig erstrecken. Zusätzlich oder alternativ kann zu einem Zeitpunkt die Klinge, insbesondere entweder, mit der einen Schneidausrichtung mit der einen Schneidkante oder mit der anderen Schneidausrichtung mit der anderen Schneidkante schneiden.

Der Schlitz kann gebogen, insbesondere S-förmig oder Bananen-förmig, sein bzw. verlaufen.

In einer Weiterbildung der Erfindung ist bzw. verläuft der Schlitz, insbesondere nur, gerade. Dies ermöglicht, dass der Schlitz kurz sein kann, und/oder eine Schwächung, insbesondere eine Materialschwächung, der Klinge gering zu halten und/oder, insbesondere somit, eine hohe Festigkeit der Klinge.

In einer Weiterbildung der Erfindung ist der Schlitz, insbesondere zur Aufnahme des Klingenhalteelements des Mähwerks, derart ausgebildet bzw. die Enden sind in der Klinge derart angeordnet, dass, insbesondere bei Halterung durch das Klingenhalteelement und Drehung des Mähwerks, insbesondere um eine Mähwerk-Drehachse herum, die Schneidausrichtungen der Klinge, insbesondere um im Wesentlichen bzw. etwa, insbesondere genau, 180 °, zueinander, insbesondere um das Klingenhalteelement herum, gedreht sind. Dies ermöglicht ein besonders gleiches, insbesondere gutes, Schnitt- bzw. Mähergebnis und/oder einen besonders gleichen Schnitt- bzw. Mähkreis. Insbesondere kann im Wesentlichen 180 ° bedeuten, dass die Schneidausrichtungen der Klinge von 180 ° maximal um 2,5 °, insbesondere maximal um 1 °, abweichen können.

In einer Weiterbildung der Erfindung verläuft die Strecke, insbesondere der Schlitz, durch einen Massenmittelpunkt bzw. einen Schwerpunkt der Klinge. Dies ermöglicht, dass die Klinge sich, insbesondere durch eine Zentrifugalkraft erzeugt bzw. verursacht durch eine Drehung des Mähwerks, insbesondere um eine Mähwerk-Drehachse herum, insbesondere entweder, insbesondere in die eine Schneidposition verschiebt und, in die eine Schneidausrichtung dreht oder, insbesondere in die andere Schneidposition verschiebt und, in die andere Schneidausrichtung dreht, bzw. die Schneidausrichtungen zu definieren bzw. festzulegen. Insbesondere kann der Massenmittelpunkt der Klinge mit einem Schnittpunkt von Diagonalen des Parallelogramms zusammenfallen.

In einer Weiterbildung der Erfindung verläuft die Strecke, insbesondere der Schlitz, punktsymmetrisch und/oder zweizählig drehsymmetrisch in der Klinge. Dies ermöglicht eine Unwucht der Klinge, insbesondere des Mähwerks, besonders gering zu halten oder sogar ganz zu vermeiden und/oder ein besonders gleiches Schnitt- bzw. Mähergebnis und/oder einen besonders gleichen Schnitt- bzw. Mähkreis. Insbesondere kann die Strecke, insbesondere der Schlitz, punktsymmetrisch und/oder zweizählig drehsymmetrisch in der Klinge angeordnet sein und geformt verlaufen. Zusätzlich oder alternativ kann die Strecke, insbesondere der Schlitz, punktsymmetrisch und/oder zweizählig drehsymmetrisch in Bezug auf einen Schnittpunkt von Diagonalen des Parallelogramms verlaufen.

In einer Weiterbildung der Erfindung sind die Enden des Schlitzes jeweils einer jeweiligen Ecke einer kurzen Diagonalen des Parallelogramms, insbesondere räumlich, näher als Ecken einer langen Diagonalen des Parallelogramms. Zusätzlich oder alternativ ist ein Kurz-Diagonal-Winkel, insbesondere ein Wert des Kurz-Diagonal-Winkels, zwischen der Strecke und einer, insbesondere der, kurzen Diagonalen des Parallelogramms kleiner als ein Lang-Diagonal-Winkel, insbesondere ein Wert des Lang-Diagonal-Winkels, zwischen der Strecke und einer, insbesondere der, langen Diagonalen des Parallelogramms. Zusätzlich oder alternativ verläuft die Strecke zwischen einer, insbesondere der, kurzen Diagonalen des Parallelogramms und einer, insbesondere der, langen Diagonalen des Parallelogramms. Dies ermöglicht, dass die Neigung der, insbesondere schneidenden bzw. mähenden, Seite des Parallelogramms in einer Drehrichtung des Mähwerks nach vorne bzw. vorwärts optimal sein kann. Somit ermöglicht dies einen besonders guten Schnittwinkel und somit ein besonders gutes Schnitt- bzw. Mähbild bzw. ein besonders gutes Schnitt- bzw. Mähergebnis. Insbesondere können/kann der Kurz-Diagonal-Winkel und/oder der Lang-Diagonal-Winkel, insbesondere jeweils, ein spitzer Winkel und/oder der kleinste Winkel sein. Insbesondere brauchen/braucht der Kurz-Diagonal-Winkel und/oder der Lang-Diagonal-Winkel, insbesondere jeweils, nicht ein größerer Supplementwinkel bzw. Ergänzungswinkel bzw. Nebenwinkel sein. Zusätzlich oder alternativ kann zwischen der kurzen Diagonalen und der langen Diagonalen in einem Bereich eines spitzen Winkels zwischen der kurzen Diagonalen und der langen Diagonalen bedeuten.

In einer Weiterbildung der Erfindung sind, unmittelbar, benachbarte Seiten des Parallelogramms verschieden lang. Insbesondere ist ein Kurz-Orthogonal-Winkel, insbesondere ein Wert des Kurz-Orthogonal-Winkels, zwischen der Strecke und einer Kurz-Orthogonalen orthogonal zu kurzen Seiten des Parallelogramms kleiner als ein Lang-Orthogonal-Winkel, insbesondere ein Wert des Lang-Orthogonal-Winkes, zwischen der Strecke und einer Lang-Orthogonalen orthogonal zu langen Seiten des Parallelogramms. Insbesondere ermöglicht dies, dass die Neigung der, insbesondere schneidenden bzw. mähenden, Seite des Parallelogramms in einer Drehrichtung des Mähwerks nach vorne bzw. vorwärts optimal sein kann. Somit ermöglicht dies einen besonders guten Schnittwinkel und somit ein besonders gutes Schnitt- bzw. Mähbild bzw. ein besonders gutes Schnitt- bzw. Mähergebnis. Insbesondere können/kann der Kurz-Orthogonal-Winkel und/oder der Lang-Orthognal-Winkel, insbesondere jeweils, ein spitzer Winkel und/oder der kleinste Winkel sein. Insbesondere brauchen/braucht der Kurz-Orthogonal-Winkel und/oder der Lang-Orthogonal-Winkel, insbesondere jeweils, nicht ein größerer Supplementwinkel bzw. Ergänzungswinkel bzw. Nebenwinkel sein.

In einer Weiterbildung der Erfindung haben bzw. weisen lange Seiten, soweit vorhanden, des Parallelogramms, insbesondere jeweils, eine Länge von minimal 20 mm (Millimeter) und/oder maximal 160 mm, insbesondere maximal 80 mm, insbesondere 40 mm, auf. Zusätzlich oder alternativ haben bzw. weisen kurze Seiten, soweit vorhanden, des Parallelogramms, insbesondere jeweils, eine Länge von minimal 10 mm und/oder maximal 80 mm, insbesondere maximal 40 mm, insbesondere 20 mm, auf. Zusätzlich oder alternativ hat bzw. weist der Schlitz eine Länge von minimal 7,5 mm und/oder maximal 30 mm, insbesondere 15 mm, auf. Zusätzlich oder alternativ ist ein, insbesondere der, Kurz-Diagonal-Winkel, insbesondere ein Wert des Kurz-Diagonal-Winkels, zwischen der Strecke und einer, insbesondere der, kurzen Diagonalen des Parallelogramms minimal 10 ° und/oder maximal 40 °, insbesondere 20 °. Zusätzlich oder alternativ ist ein, insbesondere der, Lang-Diagonal-Winkel, insbesondere ein Wert des Lang-Diagonal-Winkels, zwischen der Strecke und einer, insbesondere der, langen Diagonalen des Parallelogramms minimal 15 ° und/oder maximal 75 °, insbesondere 37,5 °. Zusätzlich oder alternativ ist ein, insbesondere der, Kurz-Orthogonal-Winkel, insbesondere ein Wert des Kurz-Orthogonal-Winkels, zwischen der Strecke und einer, insbesondere der, Kurz-Orthogonalen orthogonal zu kurzen Seiten, soweit vorhanden, des Parallelogramms minimal 2,5 ° und/oder maximal 10 °, insbesondere 5 °. Zusätzlich oder alternativ ist ein, insbesondere der, Lang-Orthogonal-Winkel, insbesondere ein Wert des Lang-Orthogonal-Winkels, zwischen der Strecke und einer, insbesondere der, Lang-Orthogonalen orthogonal zu langen Seiten, soweit vorhanden, des Parallelogramms minimal 70 ° und/oder maximal 85 °, insbesondere 80 °.

Das erfindungsgemäße Mähwerk ist für einen Rasenmäher und/oder eine Motorsense ausgebildet bzw. konfiguriert. Das Mähwerk umfasst bzw. weist mindestens eine, insbesondere die, Klinge wie vorhergehend genannt bzw. beschrieben und, insbesondere nur, eine, insbesondere einzige, Klingenhalteeinrichtung auf. Die Klingenhalteeinrichtung umfasst bzw. weist mindestens ein, insbesondere das, Klingenhalteelement zur, insbesondere beweglich gelagerten, Halterung der Klinge auf. Die Klingenhalteeinrichtung ist zur Drehung bzw. rotatorischen Bewegung um eine, insbesondere die und/oder zentrale, Mähwerk-Drehachse des Mähwerks herum ausgebildet bzw. konfiguriert.

Insbesondere kann das Mähwerk eine Mehrzahl von, insbesondere baugleichen, Klingen wie vorhergehend genannt aufweisen. Die Klingenhalteeinrichtung kann eine Mehrzahl von Klingenhalteelementen aufweisen. Insbesondere können die Mehrzahl von Klingen und die Mehrzahl von Klingenhalteelementen einander entsprechen, insbesondere gleichen.

Das Klingenhalteelement und der Schlitz der Klinge können zur Aufnahme des Klingenhalteelements, insbesondere parallel zu einer Elementlängsachse des Klingenhalteelements, ausgebildet sein. Insbesondere kann die Elementlängsachse nichtorthogonal, insbesondere parallel, in Bezug auf die Mähwerk-Drehachse sein. Zusätzlich oder alternativ kann die Elementlängsachse nicht-parallel, insbesondere orthogonal, in Bezug auf eine Drehrichtung des Mähwerks, insbesondere der Klingenhalteeinrichtung, und/oder eine Radialrichtung orthogonal zu der Drehrichtung und/oder der Mähwerk-Drehachse, insbesondere von der Mähwerk-Drehachse ausgehend, sein.

Die Halterung kann, insbesondere zerstörungsfrei und/oder werkzeugfrei, lösbar sein, insbesondere durch einen Benutzer.

Die Klinge und die Klingenhalteeinrichtung können verschieden sein.

Die Klingenhalteeinrichtung kann eine Klingen- bzw. Messerscheibe aufweisen, insbesondere sein.

Die Klinge kann bei, insbesondere durch, die Drehung der Klingenhalteeinrichtung, insbesondere um die Mähwerk-Drehachse herum, über einen, insbesondere in einer Radialrichtung orthogonal zu der Mähwerk-Drehachse, insbesondere von der Mähwerk-Drehachse ausgehend, äußeren Rand der Klingenhalteeinrichtung ragen und/oder sich von der Elementlängsachse in der Radialrichtung wegerstrecken.

Das Mähwerk, insbesondere die Klingenhalteeinrichtung, kann eine, insbesondere zentral angeordnete, Wellenaufnahme zur Aufnahme einer Drehwelle, insbesondere in einer in Bezug auf die Mähwerk-Drehachse nicht-orthogonalen, insbesondere parallelen, Axialrichtung, aufweisen. Insbesondere kann die Wellenaufnahme die Mähwerk-Drehachse definieren.

In einer Weiterbildung der Erfindung ist das Klingenhalteelement in einer, insbesondere der, Radialrichtung orthogonal zu der Mähwerk-Drehachse, insbesondere von der Mähwerk-Drehachse ausgehend, von der Mähwerk-Drehachse beabstandet bzw. dezentral angeordnet. Dies ermöglicht, dass die Zentrifugalkraft, insbesondere erzeugt bzw. verursacht durch die Drehung des Mähwerks, insbesondere um die Mähwerk-Drehachse herum, auf die Klinge wirken kann.

In einer Weiterbildung der Erfindung ist das Parallelogramm derart geformt und die Enden des Schlitzes sind in der Klinge derart angeordnet, insbesondere und das Klingenhalteelement ist derart angeordnet, dass bei Halterung durch das Klingenhalteelement und bei Drehung des Mähwerks die Mähwerk-Drehachse von zwei jeweiligen entfernten Ecken, insbesondere einer kurzen Seite, des Parallelogramms in der einen Schneidposition der Klinge mit der einen Schneidausrichtung der Klinge und/oder in der anderen Schneidposition der Klinge mit der anderen Schneidausrichtung der Klinge, insbesondere durch die Zentrifugalkraft verschoben und gedreht, im Wesentlichen bzw. etwa, insbesondere genau, gleiche Abstände, insbesondere gleiche Werte der Abstände, aufweist bzw. hat. Insbesondere sind die Abstände, insbesondere Werte der Abstände, insbesondere jeweils, minimal 80 mm und/oder maximal 640 mm, insbesondere maximal 320 mm, insbesondere 140 mm. Dies ermöglicht einen besonders gleichen Schnitt- bzw. Mähkreis. Insbesondere kann im Wesentlichen gleiche Abstände bedeuten, dass die Abstände eine Abweichung, insbesondere eine Längenabweichung von maximal 2,5 %, insbesondere maximal 1 %, aufweisen können.

In einer Weiterbildung der Erfindung ist das Parallelogramm derart geformt und die Enden des Schlitzes sind in der Klinge derart angeordnet, insbesondere und das Klingenhalteelement ist derart angeordnet, dass bei Halterung durch das Klingenhalteelement und bei Drehung des Mähwerks eine, insbesondere lange, Seite des Parallelogramms in der einen Schneidposition der Klinge mit der einen Schneidausrichtung der Klinge und/oder in der anderen Schneidposition der Klinge mit der anderen Schneidausrichtung der Klinge, insbesondere durch die Zentrifugalkraft verschoben und gedreht, im Wesentlichen bzw. etwa, insbesondere genau, in bzw. auf einer, insbesondere der, Radialrichtung orthogonal zu der Mähwerk-Drehachse, insbesondere von der Mähwerk-Drehachse ausgehend, verläuft. Dies ermöglicht, dass die Neigung der, insbesondere schneidenden bzw. mähenden, Seite des Parallelogramms in einer Drehrichtung des Mähwerks nach vorne bzw. vorwärts optimal sein kann. Somit ermöglicht dies einen besonders guten Schnittwinkel und somit ein besonders gutes Schnitt- bzw. Mähbild bzw. ein besonders gutes Schnitt- bzw. Mähergebnis. Insbesondere kann im Wesentlichen in bedeuten, dass die Seite und die Radialrichtung eine Winkelabweichung von maximal 2,5 °, insbesondere maximal 1 °, aufweisen können.

Der erfindungsgemäße Rasenmäher und/oder die erfindungsgemäße Motorsense umfassen/umfasst bzw. weisen/weist, insbesondere jeweils, ein, insbesondere das, Mähwerk wie vorhergehend genannt bzw. beschrieben auf.

Insbesondere kann der Rasenmäher ein, insbesondere autonomer mobiler, Roboterrasenmäher sein.

Die Motorsense kann ein Freischneider, ein Grastrimmer und/oder ein Rasentrimmer sein.

Der Rasenmäher und/oder die Motorsense können/kann, insbesondere jeweils, eine, insbesondere die, Drehwelle bzw. -nabe bzw. Antriebswelle aufweisen. Insbesondere kann die Drehwelle zur Drehung um die Mähwerk-Drehachse herum ausgebildet sein.

Der Rasenmäher und/oder die Motorsense können/kann, insbesondere jeweils, einen, insbesondere elektrischen, Antriebsmotor zum Antrieb zur Drehung, insbesondere der Drehwelle und somit, des Mähwerks, insbesondere der Klingenhalteeinrichtung, um die Mähwerk-Drehachse herum aufweisen.

In einer Weiterbildung der Erfindung weisen/weist der Rasenmäher und/oder die Motorsense, insbesondere jeweils, ein, insbesondere das, Mähwerk mit der Seite des Parallelogramms im Wesentlichen in der Radialrichtung verlaufend auf. Der Rasenmäher und/oder die Motorsense sind/ist, insbesondere jeweils, zur Drehung bzw. rotatorischen Bewegung des Mähwerks, insbesondere der Klingenhalteeinrichtung, mit der Klinge mit der im Wesentlichen in der Radialrichtung verlaufenden Seite vorne bzw. vorwärts bzw. voran bzw. als Vorderseite mindestens zeitweise ausgebildet bzw. konfiguriert. Dies ermöglicht einen besonders guten Schnittwinkel und somit ein besonders gutes Schnitt- bzw. Mähbild bzw. ein besonders gutes Schnitt- bzw. Mähergebnis. Insbesondere kann mindestens zeitweise mindestens 50 % der Zeit bedeuten.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: eine Draufsicht auf eine erfindungsgemäße Klinge für ein Mähwerk für einen Rasenmäher und/oder eine Motorsense,
- Fig. 2: eine Querschnittansicht der Klinge der Fig. 1 entlang der Schnittebene II-II,
- Fig. 3: eine weitere Querschnittansicht der Klinge der Fig. 1 entlang der weiteren Schnittebene III-III,
- Fig. 4: eine Perspektivansicht der Klinge der Fig. 1 von oben,
- Fig. 5: eine weitere Perspektivansicht der Klinge der Fig. 1 von unten,
- Fig. 6: eine Längsschnittansicht eines erfindungsgemäßen Mähwerks für einen Rasenmäher und/oder eine Motorsense aufweisend die Klinge der Fig. 1,
- Fig. 7: eine schematische Draufsicht auf das Mähwerk der Fig. 6, und
- Fig. 8: eine schematische Ansicht eines erfindungsgemäßen Rasenmähers und einer erfindungsgemäßen Motorsense aufweisend das Mähwerk der Fig. 6.

### DETAILLIERTE BESCHREIBUNG DER AUSFÜHRUNGSBEISPIELE

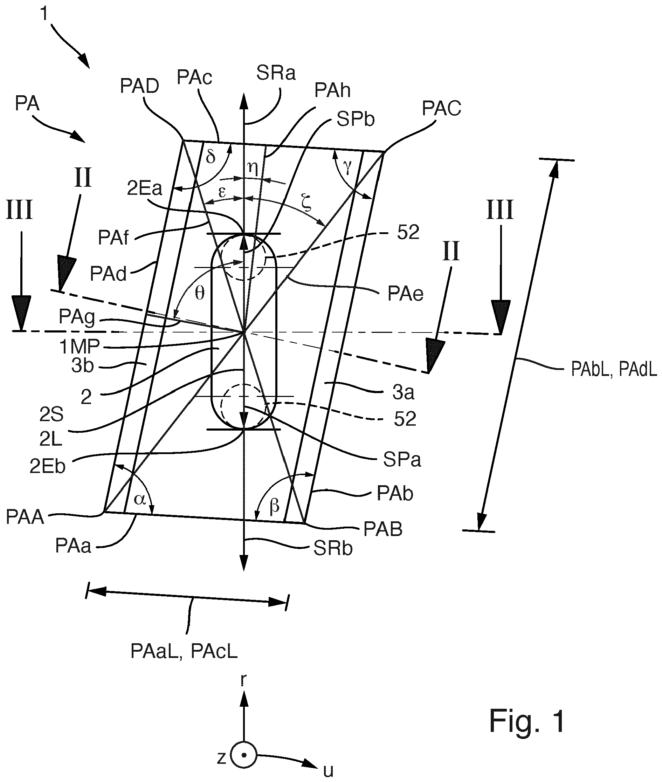

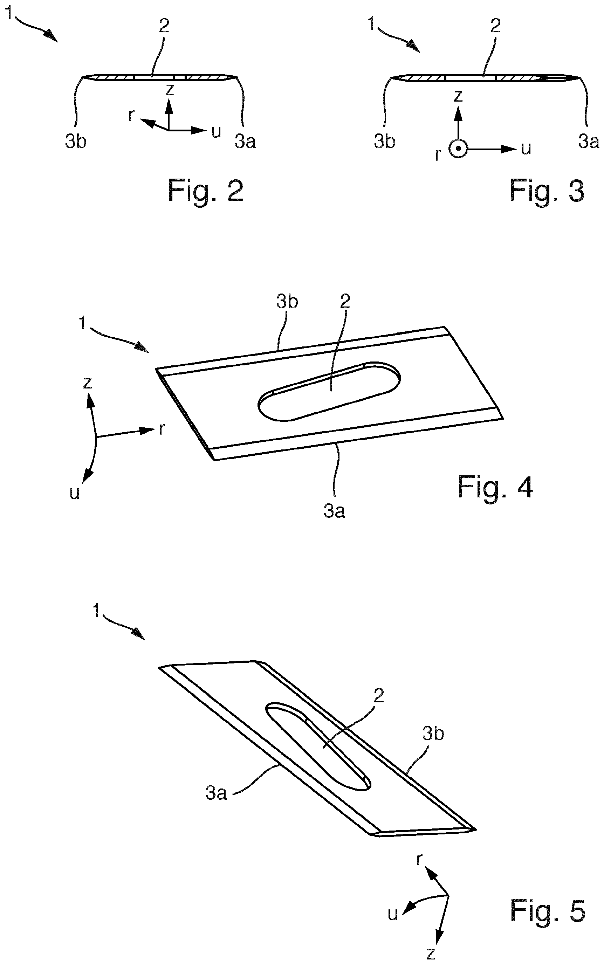

Fig. 1 bis 8 zeigen eine erfindungsgemäße Klinge 1 für ein Mähwerk 50 für einen Rasenmäher 100 und/oder eine Motorsense 200. Die Klinge 1 ist im Wesentlichen Parallelogramm-förmig, insbesondere in einer Ebene und/oder in den, insbesondere im Wesentlichen horizontalen, Richtungen r, u, insbesondere einer Radialrichtung r und einer Drehrichtung u. Die Klinge 1 weist einen Schlitz 2 auf. Der Schlitz 2 ist zur Aufnahme eines Klingenhalteelements 52 des Mähwerks 50 derart ausgebildet, dass die Klinge 1 sich um das Klingenhalteelement 52 herum drehen und gegenüber dem Klingenhalteelement 52 verschieben kann für eine Schneidposition SPa der Klinge 1 definiert durch ein Ende 2Ea des Schlitzes 2 mit einer Schneidausrichtung SRa der Klinge 1 und eine andere Schneidposition SPb der Klinge 1 definiert durch ein anderes Ende 2Eb des Schlitzes 2 mit einer anderen Schneidausrichtung SRb der Klinge 1. Eine durch die Enden 2Ea, 2Eb des Schlitzes 2 begrenzte Strecke 2S verläuft nicht-parallel zu Seiten PAa, PAb, PAc, PAd des Parallelogramms PA. Das Parallelogramm PA weist einen stumpfen Innenwinkel β, δ auf.

Insbesondere kann im Wesentlichen horizontal eine Abweichung, insbesondere eine Winkelabweichung, in Bezug auf eine, insbesondere die, Horizontale von maximal 10 °, insbesondere maximal 5 °, insbesondere 3 °, bedeuten.

Im Detail weist die Klinge 1 an mindestens zwei gegenüberliegenden, insbesondere langen, Seiten PAb, PAd des Parallelogramms PA Schneidkanten 3a, 3b auf. Insbesondere ist der Schlitz 2 derart ausgebildet, dass die Klinge 1 mit der einen Schneidausrichtung SRa mit einer der Schneidkanten 3a und mit der anderen Schneidausrichtung SRb mit einer anderen der Schneidkanten 3b schneiden kann.

Des Weiteren ist der Schlitz 2 gerade.

Außerdem ist der Schlitz 2 derart ausgebildet, dass die Schneidausrichtungen SRa, SRb der Klinge 1, insbesondere um im Wesentlichen 180 °, zueinander gedreht sind.

Weiter verläuft die Strecke 2S, insbesondere der Schlitz 2, durch einen Massenmittelpunkt 1MP der Klinge 1.

Zudem verläuft die Strecke 2S, insbesondere der Schlitz 2, punktsymmetrisch und/oder zweizählig drehsymmetrisch in der Klinge 1.

Des Weiteren sind die Enden 2Ea, 2Eb des Schlitzes 2 jeweils einer jeweiligen Ecke PAB, PAD einer kurzen Diagonalen PAf des Parallelogramms PA näher als Ecken PAA, PAC einer langen Diagonalen PAe des Parallelogramms PA.

Zusätzlich oder alternativ ist ein Kurz-Diagonal-Winkel ε zwischen der Strecke 2S und der kurzen Diagonalen PAf des Parallelogramms PA kleiner als ein Lang-Diagonal-Winkel ζ zwischen der Strecke 2S und der langen Diagonalen PAe des Parallelogramms PA.

Zusätzlich oder alternativ verläuft die Strecke 2S zwischen der kurzen Diagonalen PAf des Parallelogramms PA und der langen Diagonalen PAe des Parallelogramms PA.

Außerdem sind benachbarte Seiten PAa, PAb, PAc, PAd des Parallelogramms PA verschieden lang. Insbesondere ist ein Kurz-Orthogonal-Winkel η zwischen der Strecke 2S und einer Kurz-Orthogonalen PAh orthogonal zu den kurzen Seiten PAa, PAc des Parallelogramms PA kleiner als ein Lang-Orthogonal-Winkel θ zwischen der Strecke 2S und einer Lang-Orthogonalen PAg orthogonal zu den langen Seiten PAb, PAd des Parallelogramms PA.

Im Detail weisen die langen Seiten PAb, PAd des Parallelogramms PA eine Länge PAbL, PAdL von minimal 20 mm und/oder maximal 160 mm, insbesondere 40 mm, auf.

Zusätzlich oder alternativ weisen die kurze Seiten PAa, PAc des Parallelogramms PA eine Länge PAaL, PAcL von minimal 10 mm und/oder maximal 80 mm, insbesondere 20 mm, auf.

Zusätzlich oder alternativ weist der Schlitz 2 eine Länge 2L von minimal 7,5 mm und/oder maximal 30 mm, insbesondere 15 mm, auf.

Zusätzlich ist der stumpfe Innenwinkel β, δ minimal 95 °, und insbesondere maximal 120 °, insbesondere 100 °.

Zusätzlich oder alternativ ist der Kurz-Diagonal-Winkel ε zwischen der Strecke 2S und der kurzen Diagonalen PAf des Parallelogramms PA minimal 10 ° und/oder maximal 40 °, insbesondere 20 °.

Zusätzlich oder alternativ ist der Lang-Diagonal-Winkel ζ zwischen der Strecke 2S und der langen Diagonalen PAe des Parallelogramms PA minimal 15 ° und/oder maximal 75 °, insbesondere 37,5 °.

Zusätzlich oder alternativ ist der Kurz-Orthogonal-Winkel η zwischen der Strecke 2S und der Kurz-Orthogonalen PAh orthogonal zu den kurzen Seiten PAa, PAc des Parallelogramms PA minimal 2,5 ° und/oder maximal 10 °, insbesondere 5 °.

Zusätzlich oder alternativ ist der Lang-Orthogonal-Winkel θ zwischen der Strecke 2S und der Lang-Orthogonalen PAg orthogonal zu langen Seiten PAb, PAd des Parallelogramms PA minimal 70 ° und/oder maximal 85 °, insbesondere 80 °.

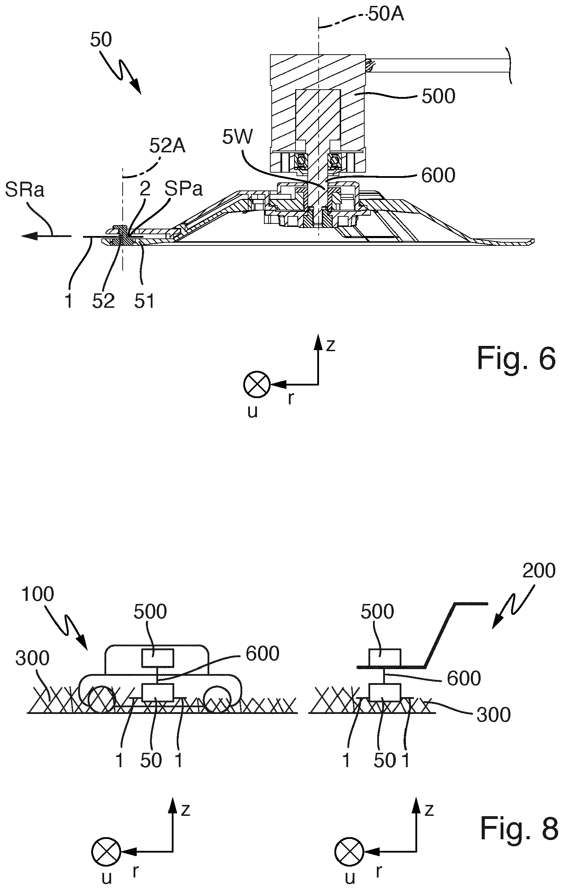

Fig. 6 bis 8 zeigen das erfindungsgemäße Mähwerk 50 für den Rasenmäher 100 und/oder die Motorsense 200. Das Mähwerk 50 weist mindestens die Klinge 1 und eine Klingenhalteeinrichtung 51 auf. Die Klingenhalteeinrichtung 51 weist mindestens das Klingenhalteelement 52 zur Halterung der Klinge 1 auf. Die Klingenhalteeinrichtung 51 ist zur Drehung um eine, insbesondere im Wesentlichen vertikale, Mähwerk-Drehachse 50A des Mähwerks 50 herum, insbesondere in der Drehrichtung u, ausgebildet.

Insbesondere kann im Wesentlichen vertikal eine Abweichung, insbesondere eine Winkelabweichung, in Bezug auf eine, insbesondere die, Vertikale. von maximal 10 °, insbesondere maximal 5 °, insbesondere 3 °, bedeuten.

In dem gezeigten Ausführungsbeispiel weist das Mähwerk 50 drei Klingen 1 auf und die Klingenhalteeinrichtung 51 weist drei Klingenhalteelemente 52 auf. In alternativen Ausführungsbeispielen kann das Mähwerk nur eine einzige Klinge oder zwei oder mindestens vier Klingen aufweisen. Zusätzlich oder alternativ kann in alternativen Ausführungsbeispielen die Klingenhalteeinrichtung nur ein einziges Klingenhalteelement oder zwei oder mindestens vier Klingenhalteelemente aufweisen.

Insbesondere sind die Klingen 3 und/oder die Klingenhalteelement 52 um die Mähwerk-Drehachse 50A herum, insbesondere in der Drehrichtung u, insbesondere regelmäßig, insbesondere äquidistant, insbesondere 120 °-äquidistant, angeordnet.

Weiter hat der Schlitz 2 das Klingenhalteelement 52 zur Halterung der Klinge 1 durch das Klingenhalteelement 52 aufgenommen.

In dem gezeigten Ausführungsbeispiel sind das Klingenhalteelement 52 und der Schlitz 2 der Klinge 1 zur Aufnahme des Klingenhalteelements 52 parallel zu einer, insbesondere im Wesentlichen vertikalen, Elementlängsachse 52A des Klingenhalteelements 52 ausgebildet.

Im Detail ist das Klingenhalteelement 52 in der Radialrichtung r orthogonal zu der Mähwerk-Drehachse 50A von der Mähwerk-Drehachse 50A beabstandet angeordnet.

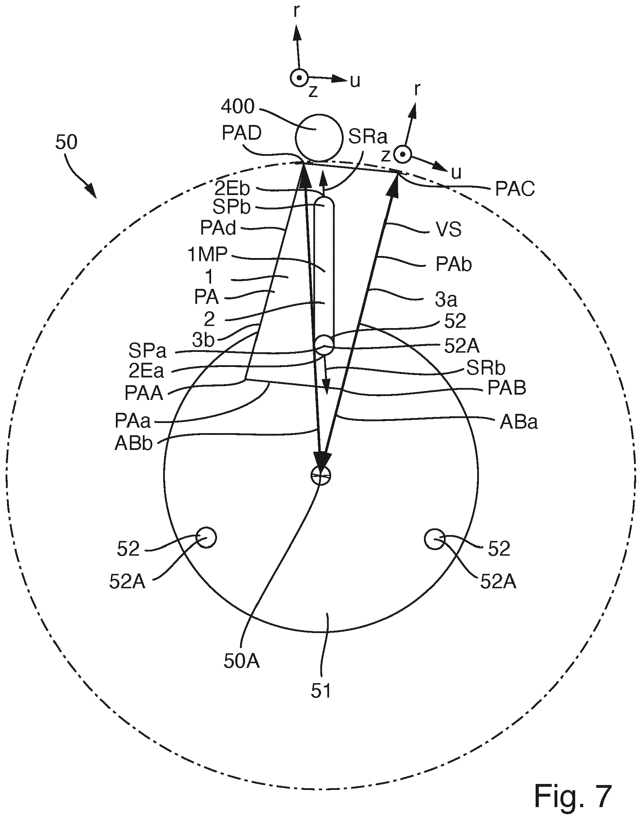

Zudem ist das Parallelogramm PA derart geformt und die Enden 2Ea, 2Eb des Schlitzes 2 sind in der Klinge 1 derart angeordnet, insbesondere und das Klingenhalteelement 52 ist derart angeordnet, dass bei Halterung durch das Klingenhalteelement 52 und bei Drehung des Mähwerks 50 die Mähwerk-Drehachse 50A von zwei jeweiligen entfernten Ecken PAC, PAD, PAA, PAB, insbesondere der kurzen Seite PAc, PAa, des Parallelogramms PA in der einen Schneidposition SPa der Klinge 1 mit der einen Schneidausrichtung SRa der Klinge 1 und/oder in der anderen Schneidposition SPb der Klinge 1 mit der anderen Schneidausrichtung SRb der Klinge 1 im Wesentlichen gleiche Abstände ABa, ABb aufweist, wie in Fig. 7 für die Ecken PAC, PAD, insbesondere der kurzen Seite PAc, des Parallelogramms PA in der einen Schneidposition SPa der Klinge 1 mit der einen Schneidausrichtung SRa der Klinge 1 gezeigt. Insbesondere sind die Abstände ABa, ABb minimal 80 mm und/oder maximal 640 mm, insbesondere 140 mm.

Des Weiteren ist das Parallelogramm PA derart geformt und die Enden 2Ea, 2Eb des Schlitzes 2 sind in der Klinge 1 derart angeordnet, insbesondere und das Klingenhalteelement 52 ist derart angeordnet, dass bei Halterung durch das Klingenhalteelement 52 und bei Drehung des Mähwerks 50 eine, insbesondere die lange, Seite PAb, PAd des Parallelogramms PA in der einen Schneidposition SPa der Klinge 1 mit der einen Schneidausrichtung SRa der Klinge 1 und/oder in der anderen Schneidposition SPb der Klinge 1 mit der anderen Schneidausrichtung SRb der Klinge 1 im Wesentlichen in der Radialrichtung r orthogonal zu der Mähwerk-Drehachse 50A verläuft, wie in Fig. 7 für die lange Seite PAb des Parallelogramms PA in der einen Schneidposition SPa der Klinge 1 mit der einen Schneidausrichtung SRa der Klinge 1 gezeigt.

Fig. 8 zeigt den erfindungsgemäßen Rasenmäher 100, insbesondere in Form eines Roboterrasenmähers, und/oder die erfindungsgemäße Motorsense 200. Der Rasenmäher 100 und/oder die Motorsense 200 weisen/weist das Mähwerk 50 auf.

Im Detail weisen/weist der Rasenmäher 100 und/oder die Motorsense 200 das Mähwerk 50 mit der Seite PAb, PAd des Parallelogramms PA im Wesentlichen in der Radialrichtung r verlaufend auf. Der Rasenmäher 100 und/oder die Motorsense 200 sind/ist zur Drehung des Mähwerks 50 mit der Klinge 1 mit der im Wesentlichen in der Radialrichtung r verlaufenden Seite PAb, PAd vorne bzw. als Vorderseite VS mindestens zeitweise ausgebildet, wie in Fig. 7 für die lange Seite PAb des Parallelogramms PA in der einen Schneidposition SPa der Klinge 1 mit der einen Schneidausrichtung SRa der Klinge 1 gezeigt.

In dem gezeigten Ausführungsbeispiel weisen/weist der Rasenmäher 100 und/oder die Motorsense 200 eine Drehwelle 600 auf. Insbesondere ist die Drehwelle 600 zur Drehung um die Mähwerk-Drehachse 50A herum ausgebildet, insbesondere dreht.

Das Mähwerk 50, insbesondere die Klingenhalteeinrichtung 51, weist eine Wellenaufnahme 5W zur Aufnahme der Drehwelle 600, insbesondere in einer in Bezug auf die Mähwerk-Drehachse 50A nicht-orthogonalen, insbesondere parallelen, insbesondere im Wesentlichen vertikalen, Axialrichtung z, auf, insbesondere hat die Wellenaufnahme 5W die Drehwelle 60 aufgenommen.

Außerdem weisen/weist der Rasenmäher 100 und/oder die Motorsense 200 einen Antriebsmotor 500 zum Antrieb zur Drehung, insbesondere der Drehwelle 600 und somit, des Mähwerks 50, insbesondere der Klingenhalteeinrichtung 51, um die Mähwerk-Drehachse 50A herum auf.

Insbesondere drehen/dreht der Rasenmäher 100 und/oder die Motorsense 200 das Mähwerk 50, insbesondere mit der Klinge 1 mit der im Wesentlichen in der Radialrichtung r verlaufenden Seite PAb, PAd vorne bzw. als Vorderseite VS, wie in Fig. 7 für die lange Seite PAb des Parallelogramms PA in der einen Schneidposition SPa der Klinge 1 mit der einen Schneidausrichtung SRa der Klinge 1 gezeigt.

Insbesondere somit, dreht die Klingenhalteeinrichtung 51 um die Mähwerk-Drehachse 50A des Mähwerks 50 herum.

Insbesondere somit, verschiebt die Klinge 1 sich, insbesondere gegenüber dem Klingenhalteelement 52, in die eine Schneidposition SPa, insbesondere ist verschoben, und dreht sich, insbesondere um das Klingenhalteelement 52 herum, in die eine Schneidausrichtung SRa, insbesondere ist gedreht, wie in Fig. 6 und 7 gezeigt, oder verschiebt sich, insbesondere gegenüber dem Klingenhalteelement 52, in die andere Schneidposition SPb, insbesondere ist verschoben, und dreht sich, insbesondere um das Klingenhalteelement 52 herum, in die andere Schneidausrichtung SRb, insbesondere ist gedreht.

Insbesondere dabei, hält das Klingenhalteelement 52 die Klinge 1, insbesondere an dem einen Ende 2Ea des Schlitzes 2 oder an dem anderen Ende 2Eb des Schlitzes 2.

Insbesondere somit, schneidet die Klinge 1 mit der einen Schneidausrichtung SRa mit der einen Schneidkante 3a, wie in Fig. 7 gezeigt, oder mit der anderen Schneidausrichtung SRb mit der anderen Schneidkante 3b, insbesondere Gras 300, wie in Fig. 8 gezeigt.

Falls die Klinge 1 auf ein Hindernis 400 trifft, bewegt die Klinge 1, insbesondere durch das Drehen und das Verschieben, von dem Hindernis 400 weg bzw. weicht aus.

Zeitlich nach dem Auftreffen, insbesondere und dem Wegbewegen bzw. Ausweichen, verschiebt die Klinge 1 sich in die eine Schneidposition SPa und dreht sich in die eine Schneidausrichtung SRa oder verschiebt sich in die andere Schneidposition SPb und dreht sich in die andere Schneidausrichtung SRb.

In dem gezeigten Ausführungsbeispiel ist das Klingenhalteelement 52 zur Halterung der Klinge 1 durch eine formschlüssige Verbindung und/oder gegen Lösen in und/oder entgegen der Radialrichtung r, insbesondere und der Drehrichtung u, insbesondere von dem Klingenhalteelement 52, ausgebildet, insbesondere hält.

Weiter ist die Klingenhalteeinrichtung 51 zur Halterung der Klinge 1 durch eine formschlüssige Verbindung und/oder gegen Lösen in und/oder entgegen der Axialrichtung z, insbesondere von der Klingenhalteeinrichtung 51, ausgebildet, insbesondere hält.

Zudem erstreckt bzw. dehnt sich die Klinge 1 in der Axialrichtung z, insbesondere im Vergleich zu der Radialrichtung r und/oder der Drehrichtung u, kaum aus.

Zusätzlich oder alternativ ist die Klinge 1 in Bezug auf eine, insbesondere die, Ebene, insbesondere Schnittebene, insbesondere Längsschnittebene, orthogonal bzw. normal zu der Axialrichtung z im Wesentlichen bzw. etwa, insbesondere genau, spiegelsymmetrisch.

Wie die gezeigten und zuvor beschriebenen Ausführungsbeispiele deutlich machen, stellt die Erfindung eine vorteilhafte Klinge für ein Mähwerk für einen Rasenmäher und/oder eine Motorsense, ein vorteilhaftes Mähwerk für einen Rasenmäher und/oder eine Motorsense aufweisend mindestens eine solche Klinge und einen vorteilhaften Rasenmäher und/oder eine vorteilhafte Motorsense aufweisend ein solches Mähwerk bereit, die und/oder das und/oder der und/oder die jeweils verbesserte Eigenschaften aufweisen/aufweist.

## Patentansprüche

1. Klinge (1) für ein Mähwerk (50) für einen Rasenmäher (100) und/oder eine Motorsense (200),
- wobei die Klinge (1) im Wesentlichen Parallelogramm-förmig ist,
- wobei die Klinge (1) einen Schlitz (2) aufweist,
- wobei der Schlitz (2) zur Aufnahme eines Klingenhalteelements (52) des Mähwerks (50) derart ausgebildet ist,
- dass die Klinge (1) sich um das Klingenhalteelement (52) herum drehen und gegenüber dem Klingenhalteelement (52) verschieben kann für eine Schneidposition (SPa) der Klinge (1) definiert durch ein Ende (2Ea) des Schlitzes (2) mit einer Schneidausrichtung (SRa) der Klinge (1) und eine andere Schneidposition (SPb) der Klinge (1) definiert durch ein anderes Ende (2Eb) des Schlitzes (2) mit einer anderen Schneidausrichtung (SRb) der Klinge (1), und
- wobei eine durch die Enden (2Ea, 2Eb) des Schlitzes (2) begrenzte Strecke (2S) nicht-parallel zu Seiten (PAa, PAb, PAc, PAd) des Parallelogramms (PA) verläuft,
- **dadurch gekennzeichnet, dass** das Parallelogramm (PA) einen stumpfen Innenwinkel (β, δ) aufweist, wobei der stumpfe Innenwinkel (β, δ) minimal 95 °, und insbesondere maximal 120 °, insbesondere 100 °, ist.

2. Klinge (1) nach Anspruch 1,
- wobei die Klinge (1) an mindestens zwei gegenüberliegenden, insbesondere langen, Seiten (PAb, PAd) des Parallelogramms (PA) Schneidkanten (3a, 3b) aufweist,
- insbesondere wobei der Schlitz (2) derart ausgebildet ist, dass die Klinge (1) mit der einen Schneidausrichtung (SRa) mit einer der Schneidkanten (3a) und mit der anderen Schneidausrichtung (SRb) mit einer anderen der Schneidkanten (3b) schneiden kann.

3. Klinge (1) nach einem der vorhergehenden Ansprüche,
- wobei der Schlitz (2) gerade ist.

4. Klinge (1) nach einem der vorhergehenden Ansprüche,
- wobei der Schlitz (2) ausgebildet ist, dass die Schneidausrichtungen (SRa, SRb) der Klinge (1), insbesondere um im Wesentlichen 180 °, zueinander gedreht sind.

5. Klinge (1) nach einem der vorhergehenden Ansprüche,
- wobei die Strecke (2S), insbesondere der Schlitz (2), durch einen Massenmittelpunkt (1MP) der Klinge (1) verläuft.

6. Klinge (1) nach einem der vorhergehenden Ansprüche,
- wobei die Stecke (2S), insbesondere der Schlitz (2), punktsymmetrisch und/oder zweizählig drehsymmetrisch in der Klinge (1) verläuft.

7. Klinge (1) nach einem der vorhergehenden Ansprüche,
- wobei die Enden (2Ea, 2Eb) des Schlitzes (2) jeweils einer jeweiligen Ecke (PAB, PAD) einer kurzen Diagonalen (PAf) des Parallelogramms (PA) näher als Ecken (PAA, PAC) einer langen Diagonalen (PAe) des Parallelogramms (PA) sind, und/oder
- wobei ein Kurz-Diagonal-Winkel (ε) zwischen der Strecke (2S) und einer kurzen Diagonalen (PAf) des Parallelogramms (PA) kleiner als ein Lang-Diagonal-Winkel (ζ) zwischen der Strecke (2S) und einer langen Diagonalen (PAe) des Parallelogramms (PA) ist, und/oder
- wobei die Strecke (2S) zwischen einer kurzen Diagonalen (PAf) des Parallelogramms (PA) und einer langen Diagonalen (PAe) des Parallelogramms (PA) verläuft.

8. Klinge (1) nach einem der vorhergehenden Ansprüche,
- wobei benachbarte Seiten (PAa, PAb, PAc, PAd) des Parallelogramms (PA) verschieden lang sind,
- insbesondere wobei ein Kurz-Orthogonal-Winkel (η) zwischen der Strecke (2S) und einer Kurz-Orthogonalen (PAh) orthogonal zu kurzen Seiten (PAa, PAc) des Parallelogramms (PA) kleiner als ein Lang-Orthogonal-Winkel (θ) zwischen der Strecke (2S) und einer Lang-Orthogonalen (PAg) orthogonal zu langen Seiten (PAb, PAd) des Parallelogramms (PA) ist.

9. Klinge (1) nach einem der vorhergehenden Ansprüche,
- wobei lange Seiten (PAb, PAd) des Parallelogramms (PA) eine Länge (PAbL, PAdL) von minimal 20 mm und/oder maximal 160 mm, insbesondere 40 mm, aufweisen, und/oder
- wobei kurze Seiten (PAa, PAc) des Parallelogramms (PA) eine Länge (PAaL, PAcL) von minimal 10 mm und/oder maximal 80 mm, insbesondere 20 mm, aufweisen, und/oder
- wobei der Schlitz (2) eine Länge (2L) von minimal 7,5 mm und/oder maximal 30 mm, insbesondere 15 mm, aufweist, und/oder
- wobei ein Kurz-Diagonal-Winkel (ε) zwischen der Strecke (2S) und einer kurzen Diagonalen (PAf) des Parallelogramms (PA) minimal 10 ° und/oder maximal 40 °, insbesondere 20 °, ist, und/oder
- wobei ein Lang-Diagonal-Winkel (ζ) zwischen der Strecke (2S) und einer langen Diagonalen (PAe) des Parallelogramms (PA) minimal 15 ° und/oder maximal 75 °, insbesondere 37,5 °, ist, und/oder
- wobei ein Kurz-Orthogonal-Winkel (η) zwischen der Strecke (2S) und einer Kurz-Orthogonalen (PAh) orthogonal zu kurzen Seiten (PAa, PAc) des Parallelogramms (PA) minimal 2,5 ° und/oder maximal 10 °, insbesondere 5 °, ist, und/oder
- wobei ein Lang-Orthogonal-Winkel (θ) zwischen der Strecke (2S) und einer Lang-Orthogonalen (PAg) orthogonal zu langen Seiten (PAb, PAd) des Parallelogramms (PA) minimal 70 ° und/oder maximal 85 °, insbesondere 80 °, ist.

10. Mähwerk (50) für einen Rasenmäher (100) und/oder eine Motorsense (200), wobei das Mähwerk (50) aufweist:
- mindestens eine Klinge (1) nach einem der vorhergehenden Ansprüche, und
- eine Klingenhalteeinrichtung (51), wobei die Klingenhalteeinrichtung (51) mindestens ein Klingenhalteelement (52) zur Halterung der Klinge (1) aufweist, und wobei die Klingenhalteeinrichtung (51) zur Drehung um eine Mähwerk-Drehachse (50A) des Mähwerks (50) herum ausgebildet ist.

11. Mähwerk (50) nach Anspruch 10,
- wobei das Klingenhalteelement (52) in einer Radialrichtung (r) orthogonal zu der Mähwerk-Drehachse (50A) von der Mähwerk-Drehachse (50A) beabstandet angeordnet ist.

12. Mähwerk (50) nach Anspruch 10 oder 11,
- wobei das Parallelogramm (PA) derart geformt ist und die Enden (2Ea, 2Eb) des Schlitzes (2) in der Klinge (1) derart angeordnet sind, insbesondere und das Klingenhalteelement (52) derart angeordnet ist, dass bei Halterung durch das Klingenhalteelement (52) und bei Drehung des Mähwerks (50) die Mähwerk-Drehachse (50A) von zwei jeweiligen entfernten Ecken (PAC, PAD, PAA, PAB), insbesondere einer kurzen Seite (PAc, PAa), des Parallelogramms (PA) in der einen Schneidposition (SPa) der Klinge (1) mit der einen Schneidausrichtung (SRa) der Klinge (1) und/oder in der anderen Schneidposition (SPb) der Klinge (1) mit der anderen Schneidausrichtung (SRb) der Klinge (1) im Wesentlichen gleiche Abstände (ABa, ABb) aufweist,
- insbesondere wobei die Abstände (ABa, ABb) minimal 80 mm und/oder maximal 640 mm, insbesondere 140 mm, sind.

13. Mähwerk (50) nach einem der Ansprüche 10 bis 12,
- wobei das Parallelogramm (PA) derart geformt ist und die Enden (2Ea, 2Eb) des Schlitzes (2) in der Klinge (1) derart angeordnet sind, insbesondere und das Klingenhalteelement (52) derart angeordnet ist, dass bei Halterung durch das Klingenhalteelement (52) und bei Drehung des Mähwerks (50) eine, insbesondere lange, Seite (PAb, PAd) des Parallelogramms (PA) in der einen Schneidposition (SPa) der Klinge (1) mit der einen Schneidausrichtung (SRa) der Klinge (1) und/oder in der anderen Schneidposition (SPb) der Klinge (1) mit der anderen Schneidausrichtung (SRb) der Klinge (1) im Wesentlichen in einer Radialrichtung (r) orthogonal zu der Mähwerk-Drehachse (50A) verläuft.

14. Rasenmäher (100) und/oder Motorsense (200), wobei der Rasenmäher (100) und/oder die Motorsense (200) aufweisen/aufweist:
- ein Mähwerk (50) nach einem der Ansprüche 10 bis 13.

15. Rasenmäher (100) und/oder Motorsense (200) nach Anspruch 14,
- wobei der Rasenmäher (100) und/oder die Motorsense (200) ein Mähwerk (50) nach Anspruch 13 aufweist, und
- wobei der Rasenmäher (100) und/oder die Motorsense (200) zur Drehung des Mähwerks (50) mit der Klinge (1) mit der im Wesentlichen in der Radialrichtung (r) verlaufenden Seite (PAb, PAd) vorne mindestens zeitweise ausgebildet sind/ist.

## Claims

1. Blade (1) for a mowing unit (50) for a lawnmower (100) and/or a motor scythe (200),
- wherein the blade (1) is substantially parallelogram-shaped,
- wherein the blade (1) has a slot (2),
- wherein the slot (2) is designed to receive a blade-holding element (52) of the mowing unit (50) such
- that the blade (1) can rotate about the blade-holding element (52) and move in translation relative to the blade-holding element (52) for one cutting position (SPa) of the blade (1) defined by one end (2Ea) of the slot (2) having one cutting orientation (SRa) of the blade (1) and another cutting position (SPb) of the blade (1) defined by another end (2Eb) of the slot (2) having another cutting orientation (SRb) of the blade (1), and
- wherein a line segment (2S) delimited by the ends (2Ea, 2Eb) of the slot (2) does run non-parallel to sides (PAa, PAb, PAc, PAd) of the parallelogram (PA),
- **characterized in that** the parallelogram (PA) has an obtuse internal angle (β, δ), wherein the obtuse internal angle (β, δ) is at least 95°, and in particular at most 120°, in particular 100°.

2. Blade (1) according to Claim 1,
- wherein the blade (1) has cutting edges (3a, 3b) at at least two opposite, in particular long, sides (PAb, PAd) of the parallelogram (PA),
- in particular wherein the slot (2) is designed such that the blade (1) can cut with one of the cutting edges (3a) with the one cutting orientation (SRa) and can cut with another of the cutting edges (3b) with the other cutting orientation (SRb).

3. Blade (1) according to either of the preceding claims,
- wherein the slot (2) is straight.

4. Blade (1) according to one of the preceding claims,
- wherein the slot (2) is designed such that the cutting orientations (SRa, SRb) of the blade (1) are rotated, in particular through substantially 180°, with respect to one another.

5. Blade (1) according to one of the preceding claims,
- wherein the line segment (2S), in particular the slot (2), runs through a centre of mass (1MP) of the blade (1).

6. Blade (1) according to one of the preceding claims,
- wherein the line segment (2S), in particular the slot (2), runs with point symmetry and/or twofold rotational symmetry in the blade (1).

7. Blade (1) according to one of the preceding claims,
- wherein the ends (2Ea, 2Eb) of the slot (2) are each closer to a respective corner (PAB, PAD) of a minor diagonal (PAf) of the parallelogram (PA) than to corners (PAA, PAC) of a major diagonal (PAe) of the parallelogram (PA), and/or
- wherein a minor-diagonal angle (ε) between the line segment (2S) and a minor diagonal (PAf) of the parallelogram (PA) is smaller than a major-diagonal angle (ζ) between the line segment (2S) and a major diagonal (PAe) of the parallelogram (PA), and/or
- wherein the line segment (2S) runs between a minor diagonal (PAf) of the parallelogram (PA) and a major diagonal (PAe) of the parallelogram (PA).

8. Blade (1) according to one of the preceding claims,
- wherein adjacent sides (PAa, PAb, PAc, PAd) of the parallelogram (PA) have different lengths,
- in particular wherein a short-orthogonal angle (η) between the line segment (2S) and a short orthogonal (PAh) orthogonal to short sides (PAa, PAc) of the parallelogram (PA) is smaller than a long-orthogonal angle (θ) between the line segment (2S) and a long orthogonal (PAg) orthogonal to long sides (PAb, PAd) of the parallelogram (PA).

9. Blade (1) according to one of the preceding claims,
- wherein long sides (PAb, PAd) of the parallelogram (PA) have a length (PAbL, PAdL) of at least 20 mm and/or at most 160 mm, in particular 40 mm, and/or
- wherein short sides (PAa, PAc) of the parallelogram (PA) have a length (PAaL, PAcL) of at least 10 mm and/or at most 80 mm, in particular 20 mm, and/or
- wherein the slot (2) has a length (2L) of at least 7.5 mm and/or at most 30 mm, in particular 15 mm, and/or
- wherein a minor-diagonal angle (ε) between the line segment (2S) and a minor diagonal (PAf) of the parallelogram (PA) is at least 10° and/or at most 40°, in particular 20°, and/or
- wherein a major-diagonal angle (ζ) between the line segment (2S) and a major diagonal (PAe) of the parallelogram (PA) is at least 15° and/or at most 75°, in particular 37.5°, and/or
- wherein a short-orthogonal angle (η) between the line segment (2S) and a short orthogonal (PAh) orthogonal to short sides (PAa, PAc) of the parallelogram (PA) is at least 2.5° and/or at most 10°, in particular 5°, and/or
- wherein a long-orthogonal angle (θ) between the line segment (2S) and a long orthogonal (PAg) orthogonal to long sides (PAb, PAd) of the parallelogram (PA) is at least 70° and/or at most 85°, in particular 80°.

10. Mowing unit (50) for a lawnmower (100) and/or a motor scythe (200), wherein the mowing unit (50) has:
- at least one blade (1) according to one of the preceding claims, and
- a blade-holding device (51), wherein the blade-holding device (51) has at least one blade-holding element (52) for holding the blade (1), and wherein the blade-holding device (51) is designed to rotate about a mowing-unit axis of rotation (50A) of the mowing unit (50).

11. Mowing unit (50) according to Claim 10,
- wherein the blade-holding element (52) is arranged in a manner spaced apart from the mowing-unit axis of rotation (50A) in a radial direction (r) orthogonal to the mowing-unit axis of rotation (50A) .

12. Mowing unit (50) according to Claim 10 or 11,
- wherein the parallelogram (PA) is formed in such a way and the ends (2Ea, 2Eb) of the slot (2) are arranged in the blade (1) in such a way, in particular and the blade-holding element (52) is arranged in such a way, that during holding by the blade-holding element (52) and during rotation of the mowing unit (50), the mowing-unit axis of rotation (50A) has substantially equal spacings (ABa, ABb) from two respective remote corners (PAC, PAD, PAA, PAB), in particular of a short side (PAc, PAa), of the parallelogram (PA) in the one cutting position (SPa) of the blade (1) having the one cutting orientation (SRa) of the blade (1) and/or in the other cutting position (SPb) of the blade (1) having the other cutting orientation (SRb) of the blade (1),
- in particular wherein the spacings (ABa, ABb) are at least 80 mm and/or at most 640 mm, in particular 140 mm.

13. Mowing unit (50) according to one of Claims 10 to 12,
- wherein the parallelogram (PA) is formed in such a way and the ends (2Ea, 2Eb) of the slot (2) are arranged in the blade (1) in such a way, in particular and the blade-holding element (52) is arranged in such a way, that during holding by the blade-holding element (52) and during rotation of the mowing unit (50), an, in particular long, side (PAb, PAd) of the parallelogram (PA) runs substantially in a radial direction (r) orthogonal to the mowing-unit axis of rotation (50A) in the one cutting position (SPa) of the blade (1) having the one cutting orientation (SRa) of the blade (1) and/or in the other cutting position (SPb) of the blade (1) having the other cutting orientation (SRb) of the blade (1).

14. Lawnmower (100) and/or motor scythe (200), wherein the lawnmower (100) and/or the motor scythe (200) have/has:
- a mowing unit (50) according to one of Claims 10 to 13.

15. Lawnmower (100) and/or motor scythe (200) according to Claim 14,
- wherein the lawnmower (100) and/or the motor scythe (200) have/has a mowing unit (50) according to Claim 13, and
- wherein the lawnmower (100) and/or the motor scythe (200) are/is designed to rotate the mowing unit (50) with the blade (1) with the side (PAb, PAd) running substantially in the radial direction (r) at the front at least at times.

## Revendications

1. Lame (1) pour un mécanisme de coupe (50) pour une tondeuse à gazon (100) et/ou une débroussailleuse (200),
- la lame (1) ayant essentiellement la forme d'un parallélogramme,
- la lame (1) présentant une fente (2),
- la fente (2) étant conçue pour recevoir un élément (52) de maintien de lame de la tondeuse à gazon (50) de telle sorte,
- que la lame (1) est apte à tourner autour de l'élément (52) de maintien de lame et à se déplacer par rapport à l'élément (52) de maintien de lame pour une position de coupe (SPa) de la lame (1) définie, dans une orientation de coupe (SRa) de la lame (1), par une extrémité (2Ea) de la fente (2), et une autre position de coupe (SPb) de la lame (1) définie, dans une autre orientation de coupe (SRb) de la lame (1), par une autre extrémité (2Eb) de la fente (2), et
- un segment (2S) délimité par les extrémités (2Ea, 2Eb) de la fente (2) s'étendant de manière non parallèle aux côtés (PAa, PAb, PAc, PAd) du parallélogramme (PA),
- **caractérisée en ce que** le parallélogramme (PA) présente un angle interne obtus (β, δ), l'angle interne obtus (β, δ) étant au minimum de 95°, et en particulier au maximum de 120°, notamment de 100°.

2. Lame (1) selon la revendication 1,
- la lame (1) présentant des arêtes de coupe (3a, 3b) sur au moins deux côtés opposés (PAb, PAd), notamment longitudinaux, du parallélogramme (PA),
- la fente (2) étant en particulier conçue de telle sorte que la lame (1) soit apte à couper, dans l'une des orientations de coupe (SRa), avec l'une des arêtes de coupe (3a) et, dans l'autre orientation de coupe (SRb), avec une autre des arêtes de coupe (3b).

3. Lame (1) selon l'une des revendications précédentes,
- dans laquelle la fente (2) est droite.

4. Lame (1) selon l'une des revendications précédentes,
- dans laquelle la fente (2) est conçue de telle sorte que les orientations de coupe (SRa, SRb) de la lame (1) soient tournées l'une par rapport à l'autre, notamment de sensiblement 180°.

5. Lame (1) selon l'une des revendications précédentes,
- dans laquelle le segment (2S), notamment la fente (2), passe par un centre de masse (1MP) de la lame (1).

6. Lame (1) selon l'une des revendications précédentes,
- dans laquelle le segment (2S), notamment la fente (2), s'étend dans la lame (1) avec une symétrie ponctuelle et/ou une double symétrie de rotation.

7. Lame (1) selon l'une des revendications précédentes,
- dans laquelle les extrémités (2Ea, 2Eb) de la fente (2) sont chacune plus proches d'un coin respectif (PAB, PAD) d'une diagonale courte (PAf) du parallélogramme (PA) que des coins (PAA, PAC) d'une diagonale longue (PAe) du parallélogramme (PA), et/ou
- dans laquelle un angle diagonal court (ε) entre le segment (2S) et une diagonale courte (PAf) du parallélogramme (PA) est inférieur à un angle diagonal long (ζ) entre le segment (2S) et une diagonale longue (PAe) du parallélogramme (PA), et/ou
- dans laquelle le segment (2S) s'étend entre une diagonale courte (PAf) du parallélogramme (PA) et une diagonale longue (PAe) du parallélogramme (PA).

8. Lame (1) selon l'une des revendications précédentes,
- dans laquelle des côtés adjacents (PAa, PAb, PAc, PAd) du parallélogramme (PA) sont de longueurs différentes,
- dans laquelle, notamment, un angle orthogonal court (η) entre le segment (2S) et une orthogonale courte (PAh) orthogonale aux côtés courts (PAa, PAc) du parallélogramme (PA) est inférieur à un angle orthogonal long (θ) entre le segment (2S) et une orthogonale longue (PAg) orthogonale aux côtés longs (PAb, PAd) du parallélogramme (PA).

9. Lame (1) selon l'une des revendications précédentes,
- dans laquelle les côtés longs (PAb, PAd) du parallélogramme (PA) ont une longueur (PAbL, PAdL) minimale de 20 mm et/ou maximale de 160 mm, notamment de 40 mm, et/ou
- dans laquelle les côtés courts (PAa, PAc) du parallélogramme (PA) ont une longueur (PAaL, PAcL) de 10 mm minimum et/ou de 80 mm maximum, en particulier de 20 mm, et/ou
- dans laquelle la fente (2) présente une longueur (2L) de 7,5 mm minimum et/ou de 30 mm maximum, en particulier de 15 mm, et/ou
- dans laquelle un angle diagonal court (ε) entre le segment (2S) et une diagonale courte (PAf) du parallélogramme (PA) est de 10° minimum et/ou de 40° maximum, en particulier de 20°, et/ou
- dans laquelle un angle diagonal long (ζ) entre le segment (2S) et une diagonale longue (PAe) du parallélogramme (PA) est au minimum de 15° et/ou au maximum de 75°, en particulier de 37,5°, et/ou
- dans laquelle un angle orthogonal court (η) entre le segment (2S) et une orthogonale courte (PAh) orthogonale aux côtés courts (PAa, PAc) du parallélogramme (PA) est au minimum de 2,5° et/ou au maximum de 10°, en particulier de 5°, et/ou
- dans laquelle un angle orthogonal long (θ) entre le segment (2S) et une orthogonale longue (PAg) orthogonale à des côtés longs (PAb, PAd) du parallélogramme (PA) est au minimum de 70° et/ou au maximum de 85°, en particulier de 80°.

10. Mécanisme de coupe (50) pour une tondeuse à gazon (100) et/ou une débroussailleuse (200), le mécanisme de coupe (50) présentant :
- au moins une lame (1) selon l'une des revendications précédentes, et
- un dispositif (51) de maintien de lame, le dispositif (51) de maintien de lame comprenant au moins un élément (52) de maintien de lame pour maintenir la lame (1), et le dispositif (51) de maintien de lame étant configuré pour tourner autour d'un axe de rotation (50A) du mécanisme de coupe (50).

11. Mécanisme de coupe (50) selon la revendication 10,
- dans lequel l'élément (52) de maintien de lame est agencé à distance de l'axe (50A) de rotation du mécanisme de coupe dans une direction radiale (r) orthogonale à l'axe (50A) de rotation du mécanisme de coupe.

12. Mécanisme de coupe (50) selon la revendication 10 ou la revendication 11,
- dans lequel, notamment, le parallélogramme (PA) est formé de telle sorte que, et les extrémités (2Ea, 2Eb) de la fente (2) dans la lame (1) sont agencées de telle sorte que, et l'élément (52) de maintien de lame est agencé de telle sorte que, lorsqu'il est maintenu par l'élément (52) de maintien de lame et que le mécanisme de coupe (50) tourne, l'axe (50A) de rotation du mécanisme de coupe s'étend depuis deux coins distants respectifs (PAC, PAD, PAA, PAB), en particulier un petit côté (PAc, PAa), du parallélogramme (PA) dans ladite une position de coupe (SPa) de la lame (1) selon l'une des orientations de coupe (SRa) de la lame (1) et/ou dans ladite autre position de coupe (SPb) de la lame (1) selon l'autre orientation de coupe (SRb) de la lame (1), présentent des distances (ABa, ABb) sensiblement égales,
- les distances (ABa, ABb) étant notamment au minimum de 80 mm et/ou au maximum de 640 mm, en particulier de 140 mm.

13. Mécanisme de coupe (50) selon l'une des revendications 10 à 12,
- dans lequel, notamment, le parallélogramme (PA) est formé de telle sorte que, et les extrémités (2Ea, 2Eb) de la fente (2) dans la lame (1) sont agencées de telle sorte que, et l'élément (52) de maintien de lame est agencé de telle sorte que, lorsqu'il est maintenu par l'élément (52) de maintien de lame et que le mécanisme de coupe (50) tourne, un côté, notamment long, (PAb, PAd) du parallélogramme (PA) dans ladite une position de coupe (SPa) de la lame (1) selon l'une des orientations de coupe (SRa) de la lame (1) et/ou dans ladite autre position de coupe (SPb) de la lame (1) selon l'autre orientation de coupe (SRb) de la lame (1) s'étend sensiblement dans une direction radiale (r) orthogonale à l'axe de rotation (50A) du plateau de coupe.

14. Tondeuse à gazon (100) et/ou débroussailleuse (200), la tondeuse à gazon (100) et/ou la débroussailleuse (200) présentant :
- un mécanisme de coupe (50) selon l'une des revendications 10 à 13.

15. Tondeuse à gazon (100) et/ou débroussailleuse (200) selon la revendication 14,
- la tondeuse à gazon (100) et/ou la débroussailleuse (200) comportant un mécanisme de coupe (50) selon la revendication 13, et
- la tondeuse à gazon (100) et/ou la débroussailleuse (200) étant configurée(s) de façon à faire tourner le mécanisme de coupe (50) avec la lame (1) ayant, au moins par moments, le côté (PAb, PAd) s'étendant sensiblement dans la direction radiale (r) situé à l'avant.
